# FASCICULE DE BREVET EUROPEEN

(11) **EP 2 161 911 B1**
(45) Date de publication et mention de la délivrance du brevet: **13.04.2011**
(21) Numéro de dépôt: 09167765.8
(22) Date de dépôt: 13.08.2009
(51) Int. Cl.: H04M 3/436

(54) **Dispositif et procédé de contrôle par un équipement de communication de fonction(s) offerte(s) par au moins un autre équipement de communication via une liaison de proximité**
Steuerungsvorrichtung und -verfahren für ein Kommunikationsgerät zur Steuerung von durch ein weiteres Kommunikationsgerät angebotenen Funktionen über eine kurzreichweitige Verbindung
System and method allowing one communication equipment control the functions offered by at least another communication equipment via a proximity link

(30) Priorité: 05.09.2008 FR 0855967
(43) Date de publication de la demande: 10.03.2010
(73) Titulaire: Alcatel Lucent, 75008 Paris (FR)
(72) Inventeur: Leroy, Jean-François, 29228, Brest (FR); Abou-Chakra, Rabih, 92707, Colombes (FR)
(74) Mandataire: Sciaux, Edmond

(56) Documents cités:
- GB-A- 2 306 853
- "INFRA-RED INTERFACES TO MOBILE RADIOS" RESEARCH DISCLOSURE, MASON PUBLICATIONS, HAMPSHIRE, GB, no. 363, 1 juillet 1994 (1994-07-01), page 366, XP000461311 ISSN: 0374-4353
- "The LP wireless messenger" INTERNET CITATION, 1 janvier 2002 (2002-01-01), XP002960046 [extrait le 2002-11-22]

## Description

L'invention concerne les équipements de communication et plus précisément les interactions fonctionnelles entre des équipements de communication d'un usager.

Comme le sait l'homme de l'art, pour que l'usager d'un équipement de communication puisse utiliser une fonction qui est différente de celles qui sont offertes par son équipement de communication, il doit presque toujours connecter ce dernier à un serveur de communication. Ce dernier doit alors assurer la gestion centralisée de tous les équipements de communication qui sont impliqués par la mise en oeuvre de cette fonction. L'équipement de communication demandeur est donc totalement dépendant du serveur de communication, et il n'est pas certain qu'il puisse effectivement bénéficier de la fonction demandée. Par exemple, dans le cas d'une fonction de transfert d'appel d'un téléphone fixe vers un téléphone mobile (ou cellulaire), la route initialement déterminée par le serveur de communication pour assurer ce transfert peut s'avérer incompatible avec la route nécessaire pour assurer effectivement ledit transfert.

Par exemple, le document GB 2.306.853 décrit un serveur de communication qui permet d'afficher sur un ordinateur des informations associées à un usager appelant, lorsque cet usager demande l'établissement d'une communication téléphonique avec un poste téléphonique qui est rattaché à ce serveur de communication, cet ordinateur étant proche du poste appelé, de façon qu'un usager du poste téléphonique puisse simultanément converser au moyen du poste téléphonique et consulter les informations affichées sur l'ordinateur.

Le document "Infrared interfaces to mobile radios" publié le 1er juillet 1994 CISSN : 0374-4353 décrit un dispositif de contrôle pour des équipements de communication.

Il est également possible de faire interagir un premier équipement de communication demandeur d'une fonction et un second équipement de communication voisin du premier et offrant cette fonction sans passer par un serveur de communication. Plus précisément, un ordinateur peut par exemple utiliser un téléphone mobile pour accéder à des données (« data »). Cela est par exemple le cas pour certaines fonctions de synchronisation de données (notamment liées aux agendas électroniques) ou d'accès à certains réseaux (notamment l'utilisation d'un réseau mobile pour accéder à l'Internet). Mais ces fonctions sont très limitées, relatives à un nombre très restreint de commandes, et ne concernent ni les communications en temps réel (notamment relatives à la voix), ni le routage d'appels (notamment relatif à la téléphonie).

L'invention a donc pour but d'améliorer la situation, et plus précisément de simplifier et enrichir les interactions fonctionnelles entre des équipements de communication qui sont proches les uns des autres, afin de mettre à leur disposition un plus grand nombre de fonctionnalités.

Elle propose à cet effet un dispositif de contrôle pour un premier équipement de communication d'un usager qui dispose en outre d'au moins un second équipement de communication, ces premier et second équipements de communication comprenant des moyens de communication leur permettant d'établir une liaison de proximité entre eux. Ce dispositif de contrôle comprend des moyens d'interface agencés, lorsque ladite liaison de proximité a été établie, pour permettre audit usager d'utiliser au moyen de son premier équipement de communication et via ladite liaison de proximité au moins une fonction offerte par son second équipement de communication et que son premier équipement de communication supporte. Il est caractérisé en ce que ces moyens d'interface comprennent des moyens d'interrogation pour demander à un second équipement communication de lui transmettre les définitions de certaines au moins des fonctions offertes par ce second équipement, et les définitions des commandes associées aux fonctions dont les définitions sont transmises.

Le dispositif selon l'invention peut comporter d'autres caractéristiques qui peuvent être prises séparément ou en combinaison, et notamment :
- ses moyens d'interface peuvent être chargés de provoquer (ou déclencher) l'affichage par le premier équipement de communication d'au moins un élément de présentation (comme par exemple un élément graphique (tel qu'une icône) ou un message audio) qui est représentatif d'au moins une commande d'une fonction offerte par, le second équipement de communication, et de contrôler l'exécution de cette commande de fonction par le second équipement de communication via la liaison de proximité, afin que l'usager puisse utiliser la fonction au moyen de son premier équipement de communication et via la liaison de proximité ;
   ➢ ses moyens d'interface peuvent être chargés, en cas de réception via la liaison de proximité de définitions de certaines au moins des fonctions offertes par le second équipement de communication et de certaines au moins des commandes associées aux fonctions offertes, de constituer des éléments de présentation représentatifs des commandes de fonction, parmi celles dont les définitions ont été reçues, que le premier équipement de communication est capable de supporter ;
      - ses moyens d'interface peuvent être chargés de constituer des éléments de présentation qui reproduisent sensiblement à l'identique des éléments de présentation affichables ou diffusables par le second équipement de communication et représentatifs de commandes de fonction qui sont offertes par le second équipement de communication et que le premier équipement de communication est capable de supporter ;
   ➢ ses moyens d'interface peuvent être chargés, en cas de réception via la liaison de proximité d'un message signalant la tentative de sollicitation ou l'utilisation d'une fonction du second équipement de communication, de provoquer (ou déclencher) l'affichage par le premier équipement de communication d'au moins un élément de présentation représentatif d'une commande de cette fonction sollicitée ;
- ses moyens d'interface peuvent être chargés, en cas d'obtention d'un résultat au moyen d'une fonction du premier équipement de communication, de transmettre (ou partager) ce résultat vers le second équipement de communication avec au moins une définition d'une commande devant être exécutée par une fonction locale avec ce résultat.

L'invention propose également un équipement de communication équipé de moyens de communication, propres à établir une liaison de proximité (filaire ou non filaire) avec un autre équipement de communication, et d'un dispositif de contrôle du type de celui présenté ci-avant.

L'invention propose également un procédé, dédié au contrôlé de fonction(s) offertes par au moins des premier et second équipements de communication d'un usager, et consistant à établir une liaison de proximité entre ces premier et seconds équipements de communication, puis à offrir la possibilité à cet usager d'utiliser (ou disposer), au moyen de son premier équipement de communication et via la liaison de proximité, au moins une fonction qui est offerte par son second équipement de communication et que son premier équipement de communication supporte. Il est caractérisé en ce qu'il consiste en outre à interroger ce second équipement de communication pour demander à ce second équipement de communication de transmettre au premier équipement de communication les définitions de certaines au moins des fonctions offertes par ce second équipement, et les définitions des commandes associées aux fonctions dont les définitions sont transmises.

On comprendra que l'invention peut s'appliquer de façon bijective d'un équipement de communication vers un autre équipement de communication voisin, et réciproquement, s'ils sont tous les deux adaptés à cet effet.

D'autres caractéristiques et avantages de l'invention apparaîtront à l'examen de la description détaillée ci-après, et des dessins annexés, sur desquels
- la figure 1 illustre, de façon très schématique et fonctionnelle deux équipements de communication équipés chacun d'un exemple de réalisation d'un dispositif de contrôle selon l'invention et connectés respectivement à deux réseaux de communication.
- la figure 2 illustre de façon très schématique un premier exemple d'affichage de fenêtres, correspondant à une première situation, sur les écrans des deux équipements de communication de la figure 1,
- la figure 3 illustre de façon très schématique un deuxième exemple d'affichage de fenêtres correspondant à une deuxième situation, sur les écrans des deux équipements de communication de la figure 1, et
- la figure 4 illustre de façon très schématique un troisième exemple d'affichage de fenêtres, correspondant à une troisième situation, sur les écrans des deux équipements de communication de la figure 1.

Les dessins annexés pourront non seulement servir à compléter l'invention, mais aussi contribuer à sa définition, le cas échéant.

L'invention a pour objet d'offrir un dispositif de contrôle et un procédé de contrôle associé permettant à un usager de contrôler (ou utiliser ou encore disposer) à distance au moyen d'un premier équipement de communication au moins une fonction qui est offerte par au moins un second équipement de communication situé à proximité du premier.

Tout type d'équipement de communication capable d'établir des liaisons de proximité avec au moins un autre équipement de communication du même type ou d'un type différent est concerné par l'invention. Par conséquent, il pourra notamment s'agir d'un téléphone fixe (par exemple de type « hardphone » (adapté à la voix sur IP via un port Ethernet)), d'un téléphone mobile ou cellulaire, d'un ordinateur fixe ou portable (par exemple équipé d'une application de type « softphone » (logiciel de téléphonie par l'Internet)), ou d'un assistant personnel numérique (ou PDA) communicant.

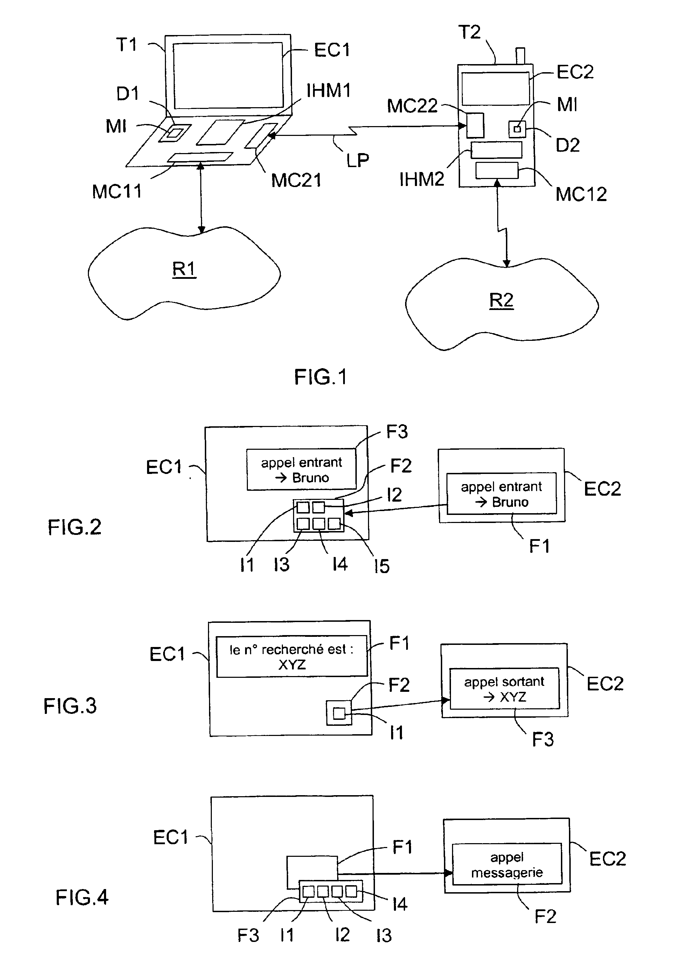

Dans ce qui suit, et comme illustré schématiquement sur la figure 1, on considère à titre d'exemple non limitatif que le premier équipement de communication T1 est un ordinateur portable (ou « laptop »), et que le second équipement de communication T2 est un téléphone mobile (ou cellulaire). Le premier équipement de communication T1 comprend donc des premiers moyens de communication MC11 lui permettant de se connecter à un réseau téléphonique commuté de type PSTN, et le second équipement de communication T2 comprend des moyens de communication MC12 lui permettant de se connecter à un réseau mobile terrestre de type PLMN.

On notera que plusieurs variantes d'architecture peuvent être envisagées par rapport à celle mentionnée ci-dessus et illustrée non limitativement sur la figure 1. Ainsi, les premier T1 et second T2 équipements de communication peuvent être tous les deux connectés à un réseau d'entreprise comprenant éventuellement un serveur de communication de type serveur d'appels (par exemple pour les communications en temps réel) et/ou un serveur d'applications professionnelles et/ou une passerelle média (« Media gateway ») connectée à au moins un réseau téléphonique commuté de type PSTN et/ou au moins un réseau mobile terrestre de type PLMN. Dans une autre variante, le premier équipement de communication T1 peut être connecté à un réseau d'entreprise comprenant éventuellement un serveur d'appels (par exemple pour les communications en temps réel) et/ou un serveur d'applications professionnelles et/ou une passerelle média (Media gateway) connectée à un réseau téléphonique commuté de type PSTN, et le second équipement de communication T2 est connecté directement à un réseau mobile terrestre de type PLMN. Dans une autre variante, le premier équipement de communication T1 peut être connecté à un réseau téléphonique commuté de type PSTN, et le second équipement de communication T2 est connecté à un réseau d'entreprise comprenant éventuellement un serveur de communication de type serveur d'appels (par exemple pour les communications en temps réel) et/ou un serveur d'applications professionnelles et/ou une passerelle média (Media gateway) connectée à un réseau mobile terrestre de type PLMN.

Par ailleurs, les premier T1 et second T2 équipements de communication comprennent des seconds moyens de communication MC21 et MC22 leur permettant d'établir une liaison de proximité LP entre eux. On considère dans ce qui suit, à titre d'exemple non limitatif, que cette liaison de proximité est une liaison radio (ou non filaire) établie dans le cadre d'un réseau personnel non filaire de type PAN (« Personal Area Network »), comme par exemple un réseau de proximité de type Bluetooth ou WiFi. Mais, il pourrait également s'agir d'une liaison filaire, directe (via un câble de connexion) ou indirecte (via un réseau local).

L'invention propose d'implanter dans les premier T1 et second T2 équipements de communication d'un usager un dispositif de contrôle Di (i = 1 ou 2). Ce dernier comprend des moyens d'interface MI qui sont chargés d'intervenir lorsqu'une liaison de proximité LP a été établie entre ses premier T1 et second T2 équipements de communication au moyen de leurs seconds moyens de communication MC21 et MC22, afin de permettre à l'usager de d'utiliser (ou disposer ou encore contrôler) au moyen de son premier équipement de communication (ici un ordinateur) T1 et via la liaison de proximité LP au moins une fonction qui est offerte par son second équipement de communication (ici un téléphone mobile) T2.

La liaison de proximité LP est automatiquement établie entre l'ordinateur T1 et le téléphone mobile T2 lorsque ce dernier pénètre dans une zone dans laquelle il peut échanger des messages radio avec l'ordinateur T1. C'est le premier équipement de communication Ti qui détecte la présence de l'autre Ti' qui initie l'établissement de la liaison de proximité LP. Bien entendu, cet établissement automatique ne peut se faire qu'à condition que l'usager ait préalablement configuré, d'une part, son ordinateur T1 en lui fournissant l'identifiant du téléphone mobile T2, et d'autre part, son téléphone mobile T2 en lui fournissant l'identifiant de l'ordinateur T1, afin qu'ils puissent se reconnaître mutuellement sans intervention manuelle, et qu'en outre l'usager ait activé la fonction autorisant l'établissement d'une liaison de proximité dans son ordinateur T1 et dans son téléphone mobile T2.

On notera que le dispositif de contrôle Di selon l'invention, et notamment son module d'interface MI, est préférentiellement réalisé sous la forme de modules logiciels (ou informatiques). Mais, il peut être également réalisé sous la forme de circuits électroniques ou d'une combinaison de circuits électroniques et de modules logiciels. Lorsque le dispositif de contrôle Di est réalisé sous la forme de modules logiciels, il peut être soit pré-implanté dans un équipement de communication Ti (par exemple dans une mémoire), soit implanté dans un équipement de communication Ti à un instant choisi par son usager au moyen d'un transfert via un réseau (téléchargement) ou via un lecteur de support de données numériques dans lequel il est stocké.

Il est également important de noter qu'un dispositif (de contrôle) Di est destiné à enrichir l'ensemble de fonctions offertes par l'équipement de communication Ti qu'il équipe avec l'une au moins des fonctions offertes par un autre équipement de communication Ti' d'un type différent ou d'un même type. Par conséquent, un dispositif Di implanté dans un premier équipement de communication Ti permet d'enrichir ce dernier avec une partie au moins des fonctions qui sont offertes par un second équipement de communication Ti'.

Bien entendu, pour qu'un premier équipement de communication Ti puisse utiliser via son dispositif Di des fonctions qui sont offertes par un second équipement de communication Ti', il faut qu'il dispose des capacités (matérielles et logicielles) requises. En d'autres termes, un premier équipement de communication Ti ne peut utiliser (ou supporter) des fonctions d'un second équipement de communication Ti', et réciproquement, qu'à condition qu'ils disposent de capacités (matérielles et logicielles) adaptées à ces fonctions.

Chaque dispositif Di peut être informé des fonctions qui sont offertes par un équipement de communication Ti' différent de celui (Ti) qu'il équipe par configuration ou par interrogation, par exemple.

La configuration peut par exemple se faire à l'initiative de l'usager par sélection dans une liste de modèles, que stocke l'un (Ti) de ses équipements de communication, du modèle de son autre équipement de communication Ti'. Cette liste peut exister nativement ou bien être téléchargée via un serveur. Chaque modèle de cette liste est stocké en correspondance des définitions de certaines au moins des fonctions qu'il offre et des définitions des commandes associées à ces fonctions offertes.

L'interrogation consiste à adresser à l'autre équipement de communication Ti' un message lui demandant de fournir à l'équipement de communication Ti soit son modèle (il faudra ensuite que le dispositif Di détermine dans une liste du type de celle précitée les définitions de certaines au moins des fonctions offertes par ce modèle et les définitions des commandes associées à ces fonctions offertes), soit les définitions de certaines au moins des fonctions qu'il offre et les définitions des commandes associées à ces fonctions offertes.

Il est également important de noter qu'un dispositif Di peut être éventuellement adapté par un spécialiste en vue d'une intégration dans un environnement spécifique défini, par exemple, par un opérateur de télécommunications et/ou un fournisseur de services et/ou un fabricant d'équipement de communication Ti. Cette adaptation peut par exemple se faire au moyen d'interface(s) de type API (« Application Programming Interface »), éventuellement de type « web service ».

Il est également important de noter que les moyens d'interface MI, d'un dispositif Di implanté dans un équipement de communication Ti, agissent en coopération étroite avec l'interface homme/machine IHMi de ce dernier. On entend ici par « interface homme/machine » tout moyen permettant à un usager de sélectionner (ou activer) une commande ou de passer un ordre à un équipement de communication Ti. Il pourra par exemple s'agir de touches d'un clavier et/ou de zones sensitives d'un écran tactile ou d'un clavier et/ou d'une « souris » (ou analogue) et/ou d'un « stylo » numérique (ou analogue) et/ou d'un microphone couplé à un module de reconnaissance vocale.

Afin de permettre à un usager d'utiliser (ou disposer ou encore contrôler) au moins partiellement une fonction offerte par l'un Ti' de ses équipements de communication, les moyens d'interface MI peuvent par exemple provoquer (ou déclencher) l'affichage sur l'écran ECi de leur équipement de communication Ti d'au moins un élément de présentation Ik (k>0) qui est représentatif d'au moins une commande de cette fonction offerte. Ils contrôlent alors à distance cette commande de fonction via la liaison de proximité LP, permettant ainsi à l'usager d'utiliser au moins partiellement la fonction s'il active (ou sélectionne) au moyen de l'interface homme/machine IHMi de son équipement de communication Ti l'icône correspondante qui est affichée sur l'écran ECi.

On entend ici par « élément de présentation » aussi bien un élément graphique (comme par exemple une icône) qu'un message audio présentant une fonction ou une commande de fonction. Dans ce qui suit on considère, à titre d'exemple non limitatif, que les éléments de présentation Ik sont tous des icônes.

On comprendra que chaque élément de présentation (ici une icône) Ik, représentatif d'une fonction ou d'une commande de fonction, peut par exemple être constituée par les moyens d'interface MI à partir de la définition de cette fonction ou de cette commande de fonction.

On notera qu'une icône Ik, éventuellement constituée par les moyens d'interface MI d'un dispositif Di d'un équipement de communication Ti et représentative d'une fonction ou d'une commande de fonction, peut être sensiblement différente ou bien sensiblement identique à celle qui est affichable (ou diffusable dans le cas d'un message audio) par l'autre équipement de communication Ti' et qui est représentative de cette même fonction ou commande de fonction qu'il offre et que l'équipement de communication Ti est capable de supporter. L'identité est avantageuse car elle permet à l'usager de travailler sensiblement dans le même environnement graphique sur ses différents équipements de communication Ti.

On notera également que les moyens d'interface MI peuvent provoquer (ou déclencher) l'affichage d'au moins une icône représentative d'une commande d'une fonction sur l'écran ECi de leur équipement de communication Ti, lorsque leur équipement de communication Ti reçoit via la liaison de proximité LP un message (d'alerte) signalant la tentative de sollicitation ou l'utilisation de cette fonction au niveau de l'autre équipement de communication Ti'. Plus précisément, lorsque les moyens d'interface MI d'un premier équipement de communication Ti reçoivent un message d'alerte signalant la tentative de sollicitation ou l'utilisation d'une fonction désignée au niveau du second équipement de communication Ti', alors, ils déterminent parmi les icônes qu'ils ont constituées (ou dont ils disposent) toutes celles (Ik) qui sont associées à cette fonction, puis ils provoquent (ou déclenchent) l'affichage de chaque icône Ik ainsi déterminée sur l'écran ECi de leur équipement de communication Ti afin de les proposer à l'usager. Si cet usager sélectionne (ou active) une icône Ik dont l'affichage a été provoqué (ou déclenché) par les moyens d'interface MI, alors le dispositif Di de ces derniers adresse à l'autre équipement de communication Ti' un message contenant la commande de fonction qui est associée à l'icône sélectionnée (ou activée), afin qu'il l'exécute. Le résultat de cette exécution peut être soit utilisé localement au niveau de l'autre équipement de communication Ti', soit transmis par ce dernier vers (ou partagé par ce dernier avec) l'équipement de communication Ti, selon le choix qui a été effectué par l'usager. Le mot « résultat » doit être ici compris dans sa définition la plus large. Il peut en effet s'agir de données récupérées ou déterminées par une commande ou bien d'une application lancée et fonctionnant en temps réel (par exemple l'établissement d'une communication entre un équipement de communication d'un tiers et le second équipement de communication Ti' de l'usager dont le dispositif Di' se charge alors éventuellement de transférer les flux de données de type voix du tiers vers le premier équipement de communication Ti de ce même usager tandis que le dispositif Di du premier équipement de communication Ti transfère les données de voix de l'usager vers le second équipement de communication Ti' afin qu'il les transmette à l'équipement de communication du tiers).

Par ailleurs, les moyens d'interface MI peuvent être également et éventuellement chargés de transférer vers le second équipement de communication Ti' (via la liaison de proximité LP), sur ordre de l'usager fourni au moyen de l'interface homme/machine IHMi du premier équipement de communication Ti, un résultat obtenu au moyen d'une fonction de ce dernier, ainsi qu'au moins une définition d'une commande devant être effectuée avec ledit résultat par une fonction locale du second équipement de communication Ti'.

On notera que les échanges entre deux dispositifs Di et Di' peuvent se faire au moyen de protocoles de signalisation et de protocoles média classiques. Par exemple la transmission de données de voix en temps réel peut se faire au moyen d'un protocole de signalisation de type SIP associé à des données de flux de type RTP. Par exemple, les interactions applicatives entre dispositifs Di et Di' peuvent se faire par échange de messages au format XML.

Il ressort de la description qui précède qu'un premier équipement de communication Ti constitue en quelque sorte un serveur de communication de type serveur de connectivité pour un second équipement de communication Ti', et que son dispositif Di constitue en quelque sorte un client de connectivité qui le couple au serveur de connectivité que constitue en quelque sorte ledit second équipement de communication Ti'.

On va maintenant décrire trois exemples d'utilisation des dispositifs Di selon l'invention en référence aux figures 2 à 4. On considère dans ces trois exemples que l'usager dispose de l'ordinateur T1 et du téléphone mobile T2 illustrés sur la figure 1. On considère par ailleurs qu'une liaison de proximité LP a été établie entre l'ordinateur T1 et le téléphone mobile T2.

Dans le premier exemple illustré sur la figure 2, l'équipement de communication d'un tiers tente d'établir une communication de type voix (éventuellement sur IP) avec le téléphone mobile T2 de l'usager. On considère ici que le dispositif D1 de l'ordinateur T1 dispose de cinq icônes (l1 à 15) associées à la fonction de communication en temps réel. Une première icône l1 permet de sélectionner la prise d'un appel sur le téléphone mobile T2, une deuxième icône l2 permet de sélectionner la prise d'un appel sur l'ordinateur T1, une troisième icône l3 permet de sélectionner une réponse à un appel avec un message court de type SMS, une quatrième icône l4 permet de sélectionner le refus de prendre un appel et le renvoi de cet appel vers la messagerie vocale du téléphone mobile T2, et une cinquième icône I5 permet de sélectionner le refus de prendre un appel et le renvoi de cet appel vers un autre numéro choisi.

Par exemple, une fenêtre F1 s'affiche sur l'écran EC2 du téléphone mobile T2 pour signaler l'appel entrant et des caractéristiques de l'appelant (comme par exemple son nom et/ou son prénom (ici bruno) ou un pseudonyme). En parallèle, le dispositif D2 du téléphone mobile T2 adresse à l'ordinateur T1 via la liaison de proximité LP un message d'alerte lui signalant l'appel entrant et éventuellement des caractéristiques de l'appelant.

A réception de ce message d'alerte, le dispositif D1 de l'ordinateur T1 recherche les icônes Ik qui sont associées à la fonction d'appel entrant, puis il provoque (ou déclenche) par exemple l'affichage sur l'écran EC1 de l'ordinateur T1 d'une fenêtre F2 contenant les (cinq) icônes Ik trouvées (ici I1 à 15) et d'une fenêtre F3 signalant l'appel entrant et éventuellement le prénom (ici bruno) de l'appelant. On peut également provoquer (ou déclencher) la diffusion d'un message audio (élément de présentation de type audio).

L'usager peut alors sélectionner l'une des cinq icônes Ik affichées dans la fenêtre F2. Par exemple, il sélectionne la première icône I1. Par conséquent, le dispositif D1 adresse au téléphone mobile T2 via la liaison de proximité LP un message lui signalant qu'il doit accepter l'appel entrant. L'usager peut alors par exemple se saisir de son téléphone mobile T2 pour discuter avec l'appelant (Bruno). Dans une variante, l'usager pourrait décider de prendre l'appel sur son ordinateur T1. Dans ce cas, le dispositif D2 se charge de transférer les données de voix de Bruno vers l'ordinateur T1 tandis que le dispositif D1 transfère les données de voix de l'usager vers le téléphone mobile T2 afin qu'il les transmette à l'équipement de communication de Bruno.

Dans le deuxième exemple illustré sur la figure 3, l'usager vient d'effectuer une recherche avec son ordinateur T1 afin de déterminer un numéro de téléphone (ici XYZ). Le résultat de cette recherche s'affiche sur l'écran EC1 de l'ordinateur dans une fenêtre F1. Par ailleurs, l'usager souhaite appeler le numéro trouvé (et affiché) avec son téléphone mobile T2. Il va alors charger sur l'écran EC1 la liste des fonctions offertes par son téléphone mobile T2 et que son ordinateur T1 supporte, laquelle est stockée par le dispositif D1 de son ordinateur T1. Par exemple cette liste s'affiche dans une fenêtre F2. L'usager sélectionne alors dans cette liste la fonction d'établissement d'un appel matérialisée par l'icône I1, puis fournit le numéro XYZ au dispositif D1. Ce dernier va alors adresser au téléphone mobile T2 via la liaison de proximité LP un message lui signalant qu'il doit établir un appel sortant en composant le numéro XYZ.

Par exemple, une fenêtre F3 s'affiche sur l'écran EC2 du téléphone mobile T2 pour signaler le numéro de l'appel sortant qu'il compose. L'usager peut alors se saisir de son téléphone mobile T2 pour discuter avec l'appelé (si ce dernier a décroché). Dans une variante, l'usager pourrait décider de téléphoner avec son téléphone mobile T2, mais de discuter avec l'appelé au moyen de l'interface homme/machine IHM1 de son ordinateur T1. Dans ce cas, le dispositif D2 se charge de transférer les données de voix de l'appelé vers l'ordinateur T1 tandis que le dispositif D1 transfère les données de voix de l'usager vers le téléphone mobile T2 afin qu'il les transmette à l'équipement de communication de l'appelé.

Dans le troisième exemple illustré sur la figure 4, l'usager veut consulter la messagerie de son téléphone mobile T2 au moyen de son ordinateur T1. Il va alors charger sur l'écran EC1 la liste des fonctions offertes par son téléphone mobile T2 et supportées par l'ordinateur T1, laquelle est stockée par le dispositif D1 de son ordinateur T1. Par exemple cette liste s'affiche dans une fenêtre F1. L'usager sélectionne alors dans cette liste la fonction de consultation de la messagerie vocale de son téléphone mobile T2. Le dispositif D1 va alors adresser au téléphone mobile T2 via la liaison de proximité LP un message lui signalant qu'il doit se connecter à la messagerie vocale de l'usager et lui transférer les données de voix sur son ordinateur T1.

Le dispositif D2 du téléphone mobile T2 ordonne alors à ce dernier de se connecter à la messagerie vocale de l'usager. Par exemple, il provoque (ou déclenche) l'affichage d'une fenêtre F2 sur l'écran EC2 du téléphone mobile T2 pour signaler la tentative d'appel de la messagerie vocale.

Sensiblement dans le même temps (ou un peu après, le temps que la connexion à la messagerie vocale soit effectuée), le dispositif D1 recherche les icônes lk qui sont associées à la fonction de consultation de messagerie vocale sélectionnée, puis il provoque (ou déclenche) l'affichage sur l'écran EC1 de l'ordinateur T1 d'une fenêtre F3 contenant les (quatre) icônes lk trouvées (ici I1 à l4) afin de permettre à l'usager d'interagir classiquement avec sa messagerie vocale.

Une fois que la connexion a été établie par le dispositif D2 du téléphone mobile T2 avec la messagerie vocale de l'usager, le dispositif D2 transfère les données de voix de la messagerie vocale vers l'ordinateur T1. L'usager peut alors interagir avec sa messagerie vocale comme s'il utilisait son téléphone mobile T2. La seule différence réside dans le fait qu'il interagit désormais au moyen de l'interface homme/machine IHM1 de son ordinateur T1 en sélectionnant (ou activant) les icônes lk affichées dans la fenêtre F2, et que les commandes de fonction associées à ces icônes sélectionnées sont transmises par le dispositif D1 via la liaison de proximité LP au dispositif D2 du téléphone mobile T2 afin qu'il les utilise à sa place auprès de la messagerie vocale.

Il est important de noter que l'invention peut être également considérée sous l'angle d'un procédé de contrôle pouvant être notamment mis en oeuvre au moyen de dispositifs de contrôle Di du type de ceux présentés ci-avant. Les fonctionnalités offertes par la mise en oeuvre du procédé selon l'invention étant identiques à celles offertes par le dispositif de contrôle Di présenté ci-avant, seule la combinaison de fonctionnalités principales offerte par le procédé est présentée ci-après.

Ce procédé de contrôle consiste à établir une liaison de proximité LP entre des premier T1 et second T2 équipements de communication d'un usager, puis à permettre à cet usager d'utiliser (ou disposer ou encore contrôler) au moyen de son premier équipement de communication T1 et via la liaison de proximité LP au moins une fonction qui est offerte par son second équipement de communication T2.

L'invention ne se limite pas aux modes de réalisation de dispositif de contrôle et d'équipement de communication décrits ci-avant, seulement à titre d'exemple, mais elle englobe toutes les variantes que pourra envisager l'homme de l'art dans le cadre des revendications ci-après.

## Revendications

1. Dispositif de contrôle (Di) pour un premier équipement de communication (T1) d'un usager disposant d'au moins un second équipement de communication (T2), lesdits premier (T1 est second (T2) équipements de communication comprenant des moyens de communication (MC2i) leur permettant d'établir une liaison de proximité entre eux,
ce dispositif de contrôle comprenant des moyens d'interface (MI) agencés, lorsque ladite liaison de proximité a été établie, pour permettre audit usager d'utiliser au moyen de son premier équipement de communication (T1) et via ladite liaison de proximité au moins une fonction offerte par son second équipement de communication (T2) et que son premier équipement de communication (T1) supporte ;
**caractérisé en ce que** ces moyens d'interface (MI) comprennent des moyens d'interrogation pour demander à ce second équipement communication (T2) de lui transmettre les définitions de certaines au moins des fonctions offertes par ce second équipement, et les définitions des commandes associées, aux fonctions dont les définitions sont transmises.

2. Dispositif selon la revendication 1, **caractérisé en ce que** lesdits moyens d'interface (MI) sont agencés pour provoquer l'affichage par ledit premier équipement de communication (T1 d'au moins un élément de présentation représentatif d'au moins une commande d'une fonction offerte par ledit second équipement de communication (T2), et pour contrôler l'exécution de ladite commande de fonction par ledit second équipement de communication (T2) via ladite liaison de proximité, de sorte que ledit usager puisse utiliser ladite fonction au moyen de son premier équipement de communication (T1) et via ladite liaison de proximité.

3. Dispositif selon la revendication 2, **caractérisé en ce que** lesdits moyens d'interface (MI) sont agencés, en cas de réception via ladite liaison de proximité de définitions de certaines au moins des fonctions offertes par ledit second équipement de communication (T2) et de certaines au moins des commandes associées auxdites fonctions offertes, pour constituer des éléments de présentation représentatifs des commandes de fonction, parmi celles dont les définitions ont été reçues, que ledit premier équipement de communication (T1) est capable de supporter

4. Dispositif selon la revendication 3, **caractérisé en ce que** lesdits moyens d'interface (MI) sont agencés pour constituer des éléments de présentation reproduisant sensiblement à l'identique des éléments de présentation affichables ou diffusables par ledit second équipement de communication (T2) et représentatives de commandes de fonction offertes par ledit second équipement de communication (T2) et que ledit premier équipement de communication (T1) est capable de supporter.

5. Dispositif selon l'une des revendications 2 à 4, **caractérisé en ce que** lesdits moyens d'interface (MI) sont agencés, en cas de réception via ladite liaison de proximité d'un message signalant la tentative de sollicitation ou l'utilisation d'une fonction dudit second équipement de communication (T2), pour provoquer l'affichage par ledit premier équipement de communication (T1) d'au moins un élément de présentation représentatif d'une commande de cette fonction sollicitée.

6. Dispositif selon l'une des revendications 1 à 5, **caractérisé en ce que** lesdits moyens d'interface (MI) sont agencés, en cas d'obtention d'un résultat au moyen d'une fonction dudit premier équipement de communication (T1), pour transmettre ledit résultat vers ledit second équipement de communication (T2) avec au moins une définition d'une commande devant être exécutée par une fonction focale avec ledit résultat.

7. Equipement de communication (Ti), comprenant des moyens de communication (MC2i) propres à établir une liaison de proximité avec un autre équipement de communication (Ti'), **caractérisé en ce qu'**il comprend en outre un dispositif de contrôle (Di) selon l'une des revendications précédentes.

8. Procédé de contrôle de fonction(s) offertes par au moins des premier (T1) et second (T2) équipements de communication d'un usager, consistant à établir une liaison de proximité entre lesdits premier (T1) et second (T2) équipements dé communication, puis à permettre audit usager d'utiliser, au moyen de son premier équipement de communication (T1) et via la liaison de proximité, au moins une fonction offerte par son second équipement de communication (T2) et que son premier équipement de communication supporte (T1) ;
**caractérisé en ce qu'**il consiste en outre à interroger ce second équipement de communication (T2) pour demander à ce second équipement de communication (T2) de transmettre au premier équipement de communication (T1) les définitions de certaines au moins des fonctions offertes par ce second équipement, et les définitions des commandes associées aux fonctions dont les définitions sont transmises.

## Claims

1. A control device (Di) for a first communication device (T1) of a user having at least one second communication device (T2), said first (T1) and second (T2) communication devices comprising communication means (MC2i) enabling them to establish a proximity link between them,
this control device comprising interface means (MI) adapted for, whenever said proximity link has been established, enabling said user to use at least means one of his or her communication device (T1) and via said proximity link at least one function offered by its second communication device (T2) and that his or her first communication device (T1) supports;
**characterized in that** these interface means (MI) comprise querying means for asking that second communication device (T2) to transmit to it the definitions of at least some of the functions offered by that second device, and the definition of the commands associated with the functions whose definitions are transmitted.

2. A device according to claim 1, **characterized in that** said interface means (MI) are adapted for causing the display by said first communication device (T1) of at least one presentation element representative of at least one command of at least one function offered by said second communication device (T2), and for checking the execution of said function command by said second communication device (T2) via said a proximity link, such that said user can use said function by means of his or her first communication device (T1) via said proximity link.

3. A device according to claim 2, **characterized in that** said interface means (MI) are adapted, in the event that definitions of at least some of the functions offered by said second communication device (T2), and at least some of the commands associated with said offered functions, are received via said proximity link, for constituting presentation elements representative of the function commands, among those functions whose definitions were received, which said first communication device (T1) is capable of supporting.

4. A device according to claim 3, **characterized in that** said interface means (MI) are adapted for constituting presentation elements that roughly identically reproduce the presentation elements that may be displayed or diffused by said second communication device (T2) and representative of function commands offered by said second communication device (T2) and that said first communication device (Ti) is capable of supporting.

5. A device according to one of the claims 2 to 4, **characterized in that** said interface means (MI) are adapted, in the event that a message indicating an attempt to request or use a function of said communication device (T2) is received by said proximity link, for causing the display by said first communication device (T1) of at least one presentation element representative of a command of that requested function.

6. A device according to one of the claims 1 to 5, **characterized in that** said interface means (MI) are adapted, in the event that a result is obtained by means of a function of said first communication device (T1), for transmitting said result to said second communication device (T2) with at least one definition of a command that needs to be executed by a local function with said result.

7. A communication device (Ti), comprising communication means (MC2i) capable of establishing a proximity link with another communication device (Ti'), **characterized in that** it further comprises a control device (Di) according to one of the preceding claims.

8. A method of checking function(s) offered by at least a user's first (T1) and second (T2) communication devices, consisting in establishing a proximity link between said first (T1) and second (T2) communication device, then enabling said user to use, by means of his or her first communication device (Ti) and via the proximity link, at least one function offered by his or her second communication device (T2) that his or her first communication device supports (T1);
**characterized in that** itfurther consists of querying that second communication device (T2) to ask that second communication device (T2) to transmit to the first communication device (Ti), the definitions of at least some of the functions offered by that second device, and the definitions of commands associated with functions whose definitions are transmitted.

## Patentansprüche

1. Steuervorrichtung (Di) für ein erstes Kommunikationsgerät (T1) eines Benutzers, welcher über mindestens ein zweites Kommunikationsgerät (T2) verfügt, wobei das besagte erste (T1) und das besagte zweite (T2) Kommunikationsgerät Kommunikationsmittel (MC2i) umfasst, über welche eine Nahverbindung zwischen diesen Kommunikationsgeräten herzustellt werden kann,
wobei diese Steuervorrichtung Schnittstellenmittel (M1) umfasst, welche, wenn die besagte Nahverbindung hergestellt ist, dazu ausgelegt sind, es dem besagten Benutzer zu ermöglichen, anhand seines ersten Kommunikationsgeräts (T1) und über die besagte Nahverbindung mindestens eine von seinem zweiten Kommunikationsgerät (T2) bereitgestellte und von seinem ersten Kommunikationsgerät (T1) unterstützte Funktion zu nutzen ;
**dadurch gekennzeichnet, dass** diese Schnittstellenmittel (M1) Abfragemittel umfassen, um dieses zweite Kommunikationsgerät (T2) aufzufordern, ihm die Definitionen zumindest bestimmter der von diesem zweiten Gerät bereitgestellten Funktionen sowie die Definitionen der mit den Funktionen, deren Definitionen übertragen werden, assoziierten Befehle, zu übertragen.

2. Vorrichtung nach Anspruch 1, **dadurch gekennzeichnet, dass** die besagten Schnittstellenmittel (M1) dazu ausgelegt sind, die Anzeige, an dem besagten ersten Kommunikationsgerät (T1), mindestens eines Darstellungselements, welches für mindestens einen Befehl einer von dem besagten zweiten Kommunikationsgerät (T2) bereitgestellten Funktion repräsentativ ist, zu bewirken und die Ausführung des besagten Funktionsbefehls durch das besagte zweite Kommunikationsgerät (T2) über die besagte Nahverbindung zu steuern, so dass der besagte Benutzer die besagte Funktion anhand seines ersten Kommunikationsgeräts (T1) und über die besagte Nahverbindung nutzen kann.

3. Vorrichtung nach Anspruch 2, **dadurch gekennzeichnet, dass** die besagten Schnittstellenmittel (M1) dazu ausgelegt sind, im Fall des Empfangs, über die besagte Nahverbindung, von Definitionen zumindest bestimmter der von dem besagten zweiten Kommunikationsgerät (T2) bereitgestellten Funktionen und zumindest bestimmter der mit den besagten bereitgestellten Funktionen assoziierten Befehle Darstellungselemente, welche für diejenigen Funktionsbefehle unter denen, deren Definitionen empfangen wurden, repräsentativ sind, die von dem besagten ersten Kommunikationsgerät (T1) unterstützt werden.

4. Vorrichtung nach Anspruch 3, **dadurch gekennzeichnet, dass** die besagten Schnittstellenmittel (M1) dazu ausgelegt sind, Darstellungselemente zu erstellen, welche Darstellungselemente, die von dem besagten zweiten Kommunikationsgerät (T2) angezeigt oder verteilt werden können und für die Befehle der von dem besagten zweiten Kommunikationsgerät (T2) bereitgestellten und von dem besagten ersten Kommunikationsgerät (T1) unterstützten Funktionen repräsentativ sind, im Wesentlichen unverändert wiedergeben.

5. Vorrichtung nach einem der Ansprüche 2 bis 4, **dadurch gekennzeichnet, dass** die besagten Schnittstellenmittel (MI) dazu ausgelegt sind, im Fall des Empfangs, über die besagte Nahverbindung, einer Nachricht, welche den Aufrufversuch oder die Nutzung einer Funktion des besagten zweiten Kommunikationsgeräts (T2) signalisiert, die Anzeige, an dem besagten ersten Kommunikationsgerät (T1), mindestens eines Darstellungselements, welches für einen Befehl dieser aufgerufenen Funktion repräsentativ ist, zu bewirken.

6. Vorrichtung nach einem der Ansprüche 1 bis 5, **dadurch gekennzeichnet, dass** die besagten Schnittstellenmittel (M1) dazu ausgelegt sind, im Fall des Erzielens eines Ergebnisses anhand einer Funktion des besagten ersten Kommunikationsgeräts (T1) das besagte Ergebnis mit mindestens einer Definition eines Befehls, welcher von einer lokalen Funktion mit dem besagten Ergebnis auszuführen ist, an das besagte zweite Kommunikationsgerät (T2) zu übertragen.

7. Kommunikationsgerät (Ti), umfassend Kommunikationsmittel (MC2i) für die Herstellung einer Nahverbindung mit einem anderen Kommunikationsgerät (Ti'), **dadurch gekennzeichnet, dass** es weiterhin eine Steuervorrichtung (Di) gemäß einem der vorstehenden Ansprüche umfasst.

8. Verfahren zur Steuerung der zumindest von dem ersten (T1) und dem zweiten (T2) Kommunikationsgerät eines Benutzers bereitgestellten Funktion(en), wobei das Verfahren darin besteht, eine Nahverbindung zwischen dem besagten ersten (T1) und dem besagten zweiten (T2) Kommunikationsmittel herzustellen und es dem besagten Benutzer anschließend zu ermöglichen, anhand seines ersten Kommunikationsgeräts (T1) und über die Nahverbindung mindestens eine der von seinem zweiten Kommunikationsgerät (T2) bereitgestellten und von seinem ersten Kommunikationsgerät (T1) unterstützten Funktionen zu nutzen;
**dadurch gekennzeichnet, dass** es weiterhin darin besteht, dieses zweite Kommunikationsgerät (T2) zu befragen, um dieses zweite Kommunikationsgerät (T2) aufzufordern, die Definitionen zumindest bestimmter der von diesem zweiten Gerät bereitgestellten Funktionen sowie die Definitionen der mit den Funktionen, deren Definitionen übertragen werden, assoziierten Befehle an das erste Kommunikationsgerät (T1) zu übertragen.
